# EUROPÄISCHE PATENTSCHRIFT

(11) **EP 1 123 180 B1**
(45) Veröffentlichungstag und Bekanntmachung des Hinweises auf die Patenterteilung: **10.12.2003**
(21) Anmeldenummer: 99949009.7
(22) Anmeldetag: 19.10.1999
(51) Int. Cl.: B29B 7/40, B29B 7/58, B29B 7/80, B29B 7/00, B29C 45/50

(54) **VORRICHTUNG ZUM HERSTELLEN UND/ODER VERARBEITEN VON MEHRKOMPONENTENGEMISCHEN**
DEVICE FOR PRODUCING AND/OR PROCESSING MIXTURES CONSISTING OF MULTIPLE CONSTITUENTS
DISPOSITIF POUR LA FABRICATION ET/OU LA TRANSFORMATION DE MELANGES MULTICOMPOSANTS

(30) Priorität: 21.10.1998 DE 19848357
(43) Veröffentlichungstag der Anmeldung: 16.08.2001
(73) Patentinhaber: EDF Polymer-Applikation Maschinenfabrik GmbH, 6912 Hörbranz (AT)
(72) Erfinder: HAUSBICHLER, Hannes, A-6900 Bregenz (AT); BALDAUF, Günter, A-6914 Hohenweiler (AT)
(74) Vertreter: Hennicke, Ernst Rüdiger, Dipl.-Ing.
(86) Internationale Anmeldenummer: EP9907937
(87) Internationale Veröffentlichungsnummer: WO00023235

(56) Entgegenhaltungen:
- DE-A- 2 419 961
- DE-A- 4 235 850
- US-A- 3 752 449
- US-A- 3 921 963
- US-A- 4 883 645
- US-A- 4 955 544
- PATENT ABSTRACTS OF JAPAN vol. 017, no. 493 (M-1475), 7. September 1993 (1993-09-07) & JP 05 124071 A (MASAO KUBOTA), 21. Mai 1993 (1993-05-21)
- PATENT ABSTRACTS OF JAPAN vol. 016, no. 376 (M-1294), 12. August 1992 (1992-08-12) & JP 04 122618 A (TDK CORP), 23. April 1992 (1992-04-23)

## Beschreibung

Die Erfindung betrifft eine Vorrichtung zum Herstellen und/oder zum Verarbeiten von Mehrkomponentengemischen, insbesondere von Kunststoffgemischen, mit einem Mischkopf mit mindestens einem Einlaß für das Gemisch oder dessen Komponenten, mit einem im Mischkopf drehend antreibbaren Rührer zum Vermischen des Gemisches bzw. dessen Komponenten und mit einem Auslaß für das Gemisch, wobei der Rührer im Mischkopf mittels einer Antriebseinheit axial verschieblich angeordnet ist und entsprechend seiner Axialposition den Auslaß freigibt oder verschließt.

Beim Verarbeiten von Kunststoffgemischen, beispielsweise zum Herstellen einer an einem Ventildeckel unmittelbar angespritzten Dichtung, sollen die einzelnen Komponenten des Kunststoffgemisches möglichst erst unmittelbar vor der Verarbeitung des Mehrkomponentenkunststoffes miteinander gemischt werden. Zur Herstellung und Verarbeitung von Mehrkomponentengemischen ist aus der DE-OS 42 35 850 eine gattungsgemäße Vorrichtung bekannt, bei der die einzelnen Komponenten des zu verarbeitenden Kunststoffgemisches einem Mischkopf zugeführt und in diesem mittels eines rotierenden Rührers miteinander gemischt werden. Das fertig gerührte Gemisch kann den Mischkopf über einen Auslauf verlassen und durch diesen direkt in eine Form gespritzt oder an ein Bauteil, beispielsweise als Dichtung angeformt werden. Bei der bekannten Mischvorrichtung dient der Rührer gleichzeitig auch als Verschlußorgan für den Auslauf und ist hierzu über einen an der Rührerwelle angreifenden Pneumatikzylinder im Mischkopf axial verschieblich, wobei der Rührer in einer ersten, unteren Stellung mit einer etwa konischen Spitze den Auslauf ventilnadelartig verschließt und in einer zweiten, angehobenen Stellung den Auslauf freigibt, so daß der fertiggemischte Kunststoff ausgespritzt werden kann.

Diese bekannte Vorrichtung hat sich in der Praxis als überaus erfolgreich erwiesen, denn der Rührer wird seiner Doppelfunktion als Rührelement einerseits und Verschlußorgan andererseits ausgesprochen zuverlässig gerecht, so daß Betriebsstörungen nur selten vorkommen und hohe Qualitäten bei den gespritzten Bauteilen, insbesondere auch bei angespritzten Dichtungen, erreicht werden. Es hat sich jedoch gezeigt, daß die bei Verwendung des unmittelbar auf die Rührerwelle wirkenden Pneumatikzylinders schlagartig einsetzende Öffnungs- bzw. Schließbewegung des Rührers in Axialrichtung bei der Verarbeitung empfindlicher Materialien eine Qualitätseinbuße bei den aus dem Gemisch hergestellten Werkstücken, Dichtungen od.dgl. zur Folge hat. Durch das schlagartig einsetzende und sehr schnelle Anheben des Rührers zum Öffnen des Auslasses wird das Volumen im Mischbereich des Mischkopfes innerhalb sehr kurzer Zeit so stark vergrößert, daß je nach Rheologie des hergestellten Gemisches bzw. dessen Komponenten dieses bzw. diese nicht schnell genug von ihrem Einlaß entlang der Mischerseitenwände durch den Mischbereich in Richtung auf den Auslauf fließen können, um das schlagartig vergrößerte Volumen in diesem Bereich auszufüllen. Es kann dann dazu kommen, daß beim schlagartigen Anheben des Rührers im Mischkopf ein Unterdruck entsteht, insbesondere wenn der Auslaß noch mit Resten des bei einer vorangehenden Verarbeitung ausgespritzten Gemisches ausgefüllt ist. Der - wenn auch nur kurzzeitig - im Mischkopf herrschende Unterdruck kann zu einem Ausgasen des hergestellten und zu verarbeitenden Kunststoffgemisches im Mischkopf führen, wodurch das zu verarbeitende Material eine Qualitätseinbuße erfährt bzw. nicht während des gesamten Verarbeitungsvorgangs gleichbleibende Verarbeitungseigenschaften hat. Es kann dann dazu kommen, daß eine mittels der Vorrichtung an einem Bauteil angespritzte Dichtung zu Beginn des Anspritzvorgangs in einem anderen Maße aufschäumt als im weiteren Verlauf der Dichtung, die dadurch keine gleichbleibende Dicke erhält, so daß eine zuverlässige Abdichtung mit der hergestellten Dichtung nicht gewährleistet werden kann.

Aus der JP-A-5 124 071 ist ein Axialtrieb für die Extruderschraube einer Spritzgußmaschine bekannt, bei dem ein drehbar antreibbares Wellenende mit mehreren an seinem Umfang angebrachten Steuernuten versehen ist, in denen drehbar gelagerte Mitnehmer gleiten können. Die Mitnehmer sind an einem axial verschieblichen, aber drehfest angeordneten Flansch angeordnet, in dem die Antriebswelle für die Extruderschraube gelagert ist. Bei Drehung des Wellenendes werden die Mitnehmer von den Steuernuten axial verschoben und verschieben dabei den Flansch und damit die Antriebswelle in Axialrichtung.

Aus der US-A-3 921 963 ist eine Spritzgußmaschine bekannt, deren Extruderschnecke in Axialrichtung von einem Hydraulikzylinder angetrieben wird und deren Rotationsgeschwindigkeit an vorbestimmte Axialpositionen in Stufen verändert wird.

Die US-A 4 883 645 zeigt einen statischen Mischkopf ohne Rührer. Dieser Mischkopf ist mit einer Reinigungseinrichtung mit einem dünnen Reinigungskolben versehen, der die Mischkammer säubert, wenn die Zufuhr von den Komponenten unterbrochen wird. Der Reinigungskolben kann für die Reinigung gedreht und von einem Axialantrieb, beispielsweise einem Nockentrieb, vor- und zurückgeschoben werden.

Aufgabe der Erfindung ist es, eine Vorrichtung der eingangs genannten Art so zu verbessern, daß ein schlagartiges Öffnen bzw. Schließen der Auslaßöffnung durch den Rührer vermieden und dadurch die nachteilhaften Einflüsse auf empfindliche, zu verarbeitende Materialien unterbunden werden. Diese Aufgabe wird mit der Erfindung dadurch gelöst, daß die Antriebseinheit einen mechanischen Nockentrieb mit mindestens einer Betätigungsnocke aufweist, die mit einem am Rührer bzw. dessen Welle angreifenden Hubelement zusammenwirkt, wobei die mindestens eine Betätigungsnocke eine Nockenform mit stetigem bzw. ruckfreiem Verlauf und einem von der Schließstellung zur den Auslaß des Mischkopfes freigebenden Stellung des Rührers hin größer werdenden Nockenradius hat.

Durch die Verwendung des Nockengetriebes mit einer oder mehreren Betätigungsnocken mit veränderlichem Nockenradius, die zum Öffnen des Auslasses das Hubelement und damit den Rührer anhebt bzw. anheben, ist es möglich, die Geschwindigkeit des Rührers beim Öffnen von einem sehr geringen Wert zu Beginn der Hubbewegung im weiteren Verlauf der Axialverschiebung des Rührers schneller werden zu lassen. Der Nockentrieb erlaubt dabei die Verwendung von Betätigungsnocken mit verschiedenartigen Nockenflächen, die optimal an das Material- und Fließverhalten des gerade verarbeitenden Werkstoffes angepaßt sein können.

Da die Betätigungsnocke(n) eine Nockenform mit stetigem bzw. ruckfreiem Verlauf hat/haben, sorgen sie für ein Anheben bzw. Zurückziehen des Rührers im Mischkopf mit gleichmäßig anwachsender Geschwindigkeit ohne Beschleunigungssprünge, also ohne schlagartige Bewegungen des Rührers während des gesamten Öffnungsvorganges, so daß sich das Volumen im Mischraum kontinuierlich vergrößert und von dem verarbeiteten Material ohne Zeitverzögerung ausgefüllt werden kann. Der von der Schließstellung zur den Auslaß des Mischkopfes freigebenden Stellung des Rührers hin größer werdende Nockenradius ermöglichst es, bei gleichbleibender Antriebsgeschwindigkeit des Antriebselements die Öffnungsgeschwindigkeit des Rührers beim Öffnen des Auslasses kontinuierlich zu vergrößern bzw. bei dessen Schließen von einer hohen Geschwindigkeit auf eine sehr geringe Geschwindigkeit kurz vor Erreichen der Schließstellung zu verringern.

Da die Öffnungsgeschwindigkeit des den Auslaß ventilnadelartig verschließenden Rührers zu Beginn der Öffnungsbewegung nur gering ist, kann das im Mischkopf befindliche Gemisch auch bereits zu diesem, während der Öffnungsbewegung am meisten kritischen Zeitpunkt das sich vergrößernde Volumen im Mischkopf ausfüllen, so daß der Rührer durch seine Verschiebung in der Mischkammer des Mischkopfes keinen Unterdruck erzeugt und das gemischte, zu verarbeitende Mehrkomponentengemisch nicht ausgasen und dadurch eine Qualitätseinbuße erfahren kann. Im weiteren Verlauf der Öffnungsbewegung, in dem der Einfluß der Öffnungsgeschwindigkeit auf das im Mischkopf zum Auslaß hin strömende Material deutlich geringer wird und die Gefahr von Qualitätseinbußen durch zu schnelle Öffnung nicht mehr vorliegt, wird die Öffnungsgeschwindigkeit durch entsprechende Ausbildung der Betätigungnocke(n) erheblich vergrößert, so daß die Gesamtzeit, innerhalb derer der Auslaß für das Mehrkomponentengemisch vollständig freigegeben wird, nicht größer sein muß als bei den bekannten Vorrichtungen und so eine Verarbeitung des Gemisches innerhalb kürzester Zeit nach Auslösung der Öffnungsbewegung des Rührers erfolgen kann.

Der Nockentrieb hat zweckmäßig mindestens eine, eine Betätigungsnocke aufweisende Nockenwelle, die in einem Lagergehäuse seitlich neben der Rührerwelle drehbar gelagert ist. Besonders zweckmäßig ist es, einen Nockentrieb mit zwei parallel angeordneten Nockenwellen mit je einer Betätigungsnocke vorzusehen, die in einem gemeinsamen Lagergehäuse beidseitig der Rührerwelle drehbar gelagert sind. Bei dieser Ausführungsform greift das Hubelement vorzugsweise an der Rührerwelle an, so daß die gesamte Antriebseinheit für die Verschiebung des Rührers in seiner Axialrichtung vom eigentlichen Mischkopf entfernt angeordnet sein kann. Es besteht daher keine Gefahr, daß die Antriebseinheit mit ihren zum Teil hochgenau gefertigten Einzelteilen in Kontakt mit dem zu bearbeitenden Mehrkomponentengemisch kommt, was zu Fehlern oder Ungenauigkeiten beim Öffnen und Schließen des Auslasses führen könnte. Durch die Verwendung von zwei parallelen Nockenwellen, die im Gehäuse vorzugsweise gegenläufig zueinander drehend angetrieben sind, wird sichergestellt, daß die bei Drehung der Nockenwellen durch Abwälzen der Nocken am Hubelement erzeugte Axialbewegung ohne störende Querkräfte genau axial in die Rührerwelle eingeleitet wird, so daß diese beim Verschieben des Rührers nicht verkantet wird. Zweckmäßig haben die Nockenwellen ein gemeinsames Antriebselement, wodurch sichergestellt wird, daß die Nocken beider Nockenwellen immer um genau den gleichen Betrag verdreht werden und gleichmäßig auf das Hubelement einwirken, um den Rührer im Mischkopf anzuheben bzw. beim Schließen wieder abzusenken.

Eine besonders vorteilhafte Antriebsart für die Nockenwellen ergibt sich, wenn diese mit je einem Antriebszahnrad versehen sind, die von einem in Axialrichtung verschieblich angetriebenen Zahnstangen-Antriebselement drehbar sind. Das Zahnstangen-Antriebselement kann hierbei mit einer Doppel- oder umlaufenden Verzahnung für beide Antriebszahnräder bei den beiden vorzugsweise parallel angeordneten Nockenwellen versehen sein. Durch Verschieben des Zahnstangen-Antriebselements in seiner Axialrichtung werden die beiden Antriebszahnräder der Nockenwellen und damit auch die darauf angeordneten Betätigungsnocken vorzugsweise gegenläufig zueinander verdreht, wobei sich die Nocken mit ihren Nockenflächen am Hubelement abwälzen und dieses je nach Verschieberichtung des Zahnstangen-Antriebselements anheben bzw. zurückziehen oder absenken bzw. vorschieben. Als ganz besonders vorteilhaft hat sich eine Ausgestaltung erwiesen, bei der das Antriebselement im wesentlichen aus dem Kolben einer hydraulischen oder pneumatischen Kolben-Zylindereinheit besteht oder mit diesem gekoppelt ist. Der von der Druckluft bzw. der Hydraulikflüssigkeit auf den Kolben der Kolben-Zylindereinheit ausgeübte Druck wird über die Zahnstange oder ein anderes geeignetes Übertragungselement auf den Nockentrieb übertragen und von diesem in die ungleichförmige, den Rührer mit immer größer werdender Geschwindigkeit von dem Auslaß abhebende Öffnungsbewegung umgesetzt.

Bei Verwendung einer Kolbenzylindereinheit für den Antrieb des Nockengetriebes kann ein doppelwirkender Zylinder zur Anwendung kommen, dem Druckluft oder Hydraulikflüssigkeit sowohl in den Zylinderraum als auch in den Ringraum zuführbar ist, um auch das Zurückdrehen der Nocken zum Schließen des Auslasses mit hoher Sicherheit zu gewährleisten. Eine einfacherere und dennoch höchst zuverlässige Ausgestaltung der Erfindung ergibt sich, wenn dem Antriebselement eine Rückstellfeder zugeordnet ist, die bei der Öffnungsbewegung des Rührers zusammengedrückt wird und zum Schließen das Antriebselement wieder in seine ursprüngliche Lage verfährt, die es bei verschlossenem Auslaß einnimmt. Wenn als Antriebselement die Kolbenstange des Kolbens eines hydraulischen oder pneumatischen Zylinders verwendet wird, stellt die Rückstellfeder das Antriebselement automatisch zurück, wenn der Druck im Zylinder der Kolbenzylindereinheit verringert bzw. aufgehoben wird.

Um zu verhindern, daß die als Schraubendruckfeder ausgebildete Rückstellfeder bei ihrem Zusammendrücken seitlich ausknickt, weist das Antriebselement vorzugsweise eine axiale Führungsbohrung auf, die die Schraubendruckfeder wenigstens teilweise aufnimmt. Die als Schraubenfeder ausgestaltete Rückstellfeder kann auch zusätzlich oder alternativ zu der Führungsbohrung um einen Führungsdorn gewunden sein, der ebenfalls dafür sorgt, daß die Feder nur in ihrer Axialrichtung zusammengedrückt bzw. auseinandergezogen werden kann und ein seitliches Auslenken der Feder nicht stattfindet.

Wie bereits angedeutet, sind die Betätigungsnocken der beiden parallel angeordneten Nockenwellen vorzugsweise spiegelbildlich zueinander ausgestaltet und die zugehörigen Nockenwellen sind gegenläufig zueinander angetrieben. Die Betätigungsnocken können auswechselbar an den zugehörigen Nockenwellen angeordnet sein, wodurch es möglich ist, durch einfachen Austausch lediglich der Betätigungsnocken die Öffnungsbewegung und Geschwindigkeit des Rührers an verschiedene, zu verarbeitende Gemische optimal anzupassen. Alternativ ist es auch möglich, die vollständigen Nokkenwellen auswechselbar im Gehäuse zu lagern und sie zusammen mit den daran angeordneten Betätigungsnocken und ggf. den Antriebszahnrädern gegen andere Nockenwellen auszutauschen, die bei der Verarbeitung eines anderen Materials Vorteile bieten.

Das Hubelement ist vorzugsweise in Axialrichtung der Rührerwelle verstellbar an dieser angeschlossen. Der verstellbare Anschluß ermöglicht es, die Vorrichtung so einzujustieren, daß der bzw. die Betätigungsnocken in der Schließstellung des Rührers mit sehr wenig Spiel ohne unmittelbaren Kontakt zum Hubelement sind, so daß sichergestellt ist, daß der Rührer mit seiner Spitze den Auslaß vollständig verschließt. Das Hubelement kann im wesentlichen aus einer die Rührerwelle koaxial umgebenden Betätigungshülse und einer mit dieser einstellbar verschraubten Lageraufnahme für ein Axiallager der Rührerwelle bestehen. Die Verstellbarkeit des Hubelements an der Rührerwelle wird dann durch Einoder Ausschrauben der Lageraufnahme aus der bzw. in die Betätigungshülse ermöglicht. Das Axiallager, das die auf das Hubelement von den Nocken ausgeübte Axialbewegung auf die Rührerwelle überträgt und diese dadurch im Gehäuse verschiebt, besteht vorzugsweise aus einem Radial-Rillenkugellager, das somit gleichzeitig das an einem Ende der Rührerwelle angeordnete Radialwellenlager bildet. Das Radial-Rillenkugellager ermöglicht also nicht nur die Drehung der Welle um ihre eigene Achse, sondern gestattet auch die Übertragung von Axialkräften bei drehender Welle zu deren Verschiebung im Gehäuse.

Das Hubelement ist zweckmäßig von dem bzw. den Betätigungsnocken entgegen der Wirkung einer Schließfeder im Gehäuse axial verschieblich. Die Schließfeder sorgt für eine Rückstellung des Hubelements und damit gleichzeitig des Rührers zum Verschließen des Auslasses, wenn die Betätigungsnocken in ihre ursprüngliche Stellung zurückverdreht werden, die sie vor Öffnen des Auslasses am Mischkopf inne hatten. Die Schließfeder drückt über das Hubelement die Rührerwelle und damit den Rührer mit seiner Spitze fest gegen den Auslaß und verschließt diesen gegen den ungewollten Austritt von in der Mischkammer noch befindlichen Materials zuverlässig.

Eine besonders einfache und elegante Ausgestaltung des Hubelementes ergibt sich, wenn die Lageraufnahme die Rührerwelle hülsenartig umgibt und mit einem Außengewinde versehen ist, mit dem sie in ein an der Betätigungshülse vorgesehenes Innengewinde eingeschraubt ist. Vorzugsweise ist die Lageraufnahme von der Gehäuseaußenseite gegenüber der Betätigungshülse einstellbar, wozu sie in einer Führungshülse axial verschieblich aufgenommen sein kann, die im Gehäuse verdrehbar angeordnet ist, während die Lageraufnahme gegenüber der Führungshülse in Umfangsrichtung arretiert ist. Durch Verdrehen der Führungshülse im Gehäuse wird bei dieser Ausgestaltung auch die Lageraufnahme mit verdreht und kann so in die gewünschte Position in der Betätigungshülse ein- bzw. ausgeschraubt werden. Zur Arretierung der Lageraufnahme gegenüber der Führungshülse ist diese zweckmäßig mit mindestens einem radial nach innen vorspringenden Haltestift versehen, der in eine an der Lageraufnahme in Axialrichtung verlaufenden Nut einfaßt. Die Lageraufnahme kann sich so in Axialrichtung gegenüber der Führungshülse frei verschieben, sich jedoch in Umfangsrichtung gegenüber der Führungshülse nicht verdrehen. Um ein Verdrehen der Führungshülse von der Gehäuseaußenseite in besonders einfacher Weise zu ermöglichen, ist sie zweckmäßig mit einem von der Gehäuseaußenseite zugänglichen Werkzeuganschluß versehen.

In bevorzugter Ausgestaltung der erfindungsgemäßen Vorrichtung. weist diese mindestens ein Anschlagelement für den Rührer bzw. die Rührerwelle auf. Das Anschlagelement begrenzt den Öffnungsweg, den die Welle bzw. der Rührer zum vollständigen Öffnen des Auslasses zurücklegen muß. Das Anschlagelement kann in einem Gehäusekopf angeordnet sein, mit dem das Gehäuse endseitig abschließt. Dabei ist die Anordnung vorzugsweise so getroffen, daß der Gehäusekopf eine zylindrische Aufnahme für das obere bzw. hintere Ende der Rührerwelle bildet, wobei die Aufnahme ein Innengewinde hat, in das das Anschlagelement verstellbar eingeschraubt ist. Die verstellbare Anordnung des Anschlagelements im Gehäusekopf gestattet eine Veränderung und Anpassung des Hubweges des Rührers, so daß auch die Größe des von der Rührerspitze und dem Auslaß definierten Ringspalts veränderlich ist und an Materialien mit verschiedenen Eigenschaften angepaßt werden kann. Vorzugsweise schlägt die Rührerwelle nicht selbst am Anschlagelement an, sondern der Anschlag erfolgt mittelbar über die Lageraufnahme. Die Schließfeder kann ebenfalls im Gehäusekopf angeordnet sein, wobei sie mit ihrem ersten Ende in Axialrichtung auf die Rührerwelle bzw. deren Lageraufnahme einwirkt und sich mit ihrem zweiten Ende an einem im Gehäusekopf angeordneten Federanschlag abstützt. Dabei ist es besonders zweckmäßig, wenn der Federanschlag verstellbar im Gehäusekopf angeordnet ist, beispielsweise ebenso wie das Anschlagelement in das im Gehäusekopf vorgesehene Innengewinde eingeschraubt ist. Das erste Ende der Schließfeder kann über einen sich an die Lageraufnahme anlegenden Federteller auf die Rührerwelle einwirken, der die Federkraft gleichmäßig über den ganzen Umfang der Lageraufnahme verteilt und so als reine, zentrisch wirkende Axialkraft in den Rührer einleitet.

Mit der Erfindung wird ein Verfahren zum Öffnen und Schließen eines Verschlußelements in einer Vorrichtung zum Herstellen und/oder Verarbeiten von Mehrkomponentengemischen vorgeschlagen, zum Betrieb einer Vorrichtung nach dem Oberbegriff des Anspruches 1, bei dem das Verschlußelement bzw. der dieses bildende Rührer beim Öffnen zum Freigeben eines Auslasses erst langsam von der Auslaßöffnung abgehoben und mit zunehmendem Abstand von der Auslaßöffnung zunehmend schneller von dieser weg bewegt wird und bei dem beim Schließen zum Absperren des Auslasses das im Abstand von der Auslaßöffnung befindliche Verschlußelement erst mit höherer Geschwindigkeit auf die Öffnung zu bewegt wird und mit abnehmendem Abstand von der Öffnung bei Annäherung an diese die Schließgeschwindigkeit verringert wird. Ein derartiges Verfahren, daß sich besonders vorteilhaft mit dem Nockentrieb der erfindungsgemäßen Vorrichtung durchführen läßt, aber natürlich auch durch ein anderes geeignetes Antriebsmittel an der Vorrichtung wie zum Beispiel einen gesteuerten Hydraulikantrieb verwirklicht werden kann, ermöglicht eine sehr schonende Behandlung auch empfindlicher Materialien bei der Verarbeitung im Mischkopf, so daß qualitativ hochwertige Bauteile mit dem Verfahren erzeugt werden können.

Weitere Merkmale und Vorteile der Erfindung ergeben sich aus der nachfolgenden Beschreibung und der Zeichnung, worin eine bevorzugte Ausführungsform der Erfindung an einem Beispiel näher erläutert wird. Es zeigt:
- Fig. 1: eine Vorrichtung zum Verarbeiten von Kunststoffgemischen nach der Erfindung in einem Vertikalschnitt;
- Fig. 2: den Gegenstand der Fig. 1 in einem Schnitt längs der Linie II-II;
- Fig. 3: den Gegenstand der Fig. 1 in einem Querschnitt längs der Linie III-III; und
- Fig. 4: einen Teil einer Antriebseinheit der erfindungsgemäßen Vorrichtung in deren Schließstellung in einer vergrößerten Schnittdarstellung entsprechend der Darstellung nach Fig. 2.

In der Zeichnung bezeichnet 10 eine erfindungsgemäße Vorrichtung zum Vermischen und Verarbeiten der Komponenten eines Kunststoffgemisches, beispielsweise eines Dichtungsschaums, der an ein Bauteil zur Bildung einer Dichtung angespritzt wird.

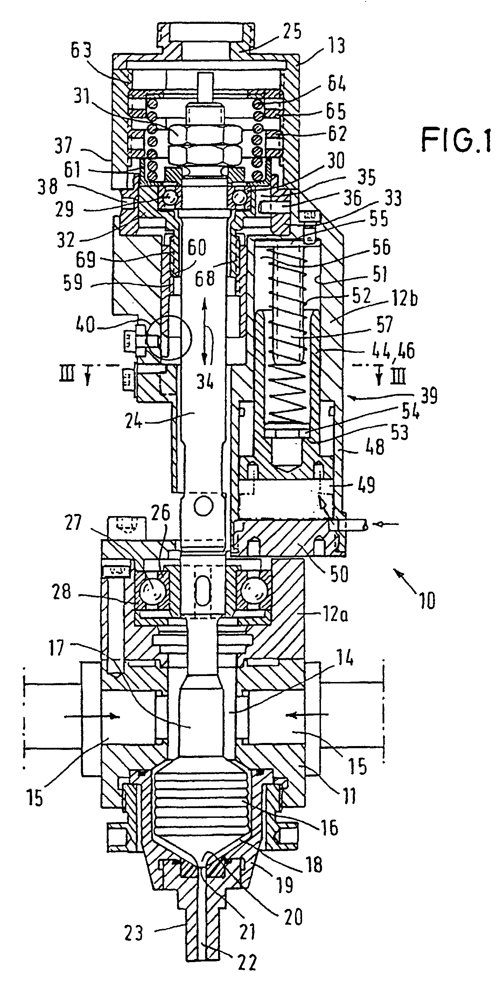

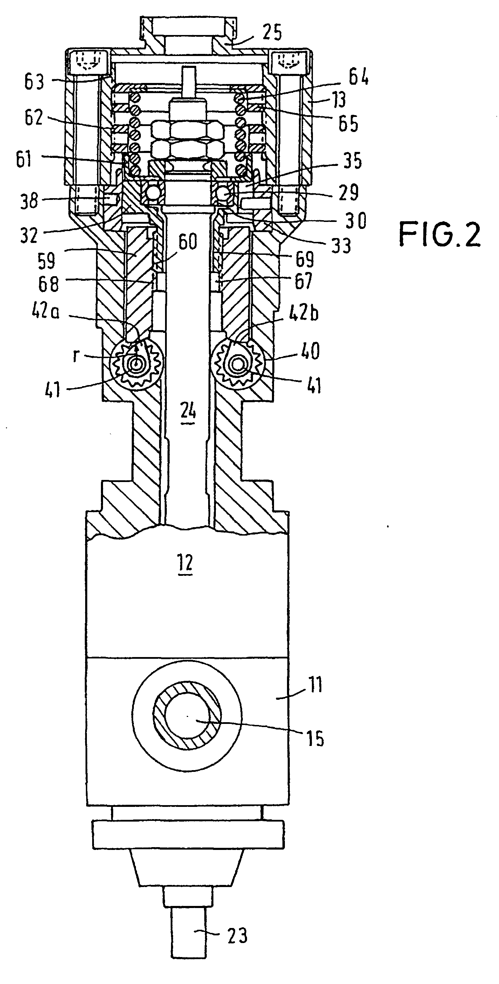

Die Vorrichtung 10 besteht im wesentlichen aus einem in den Fig. 1 und 2 unten dargestellten Mischkopf 11 mit einem daran oben angeflanschten Lagergehäuse 12, das wiederum an seinem oberen Ende mit einem Gehäusekopf 13 abgeschlossen ist. Im Mischkopf 11 ist in an sich bekannter Weise eine Mischkammer 14 ausgebildet, in die mehrere Einlässe 15 radial einmünden, durch die die Komponenten des zu mischenden und an dem nicht dargestellten Bauteil anzuspritzenden Kunststoffgemisches zugeführt werden.

Der untere Teil der Mischkammer 14 wird von dem Rührerkopf 16 eines Rührers 17 unter Bildung eines Spalts 18 zur Wandung 19 der Mischkammer ausgefüllt, mit dessen Hilfe die zugeführten Kunststoffkomponenten miteinander vermischt werden können. An seinem vorderen, in der Zeichnung unteren Ende ist der Rührer nach Art eines Kegels ausgebildet, dessen Spitze 20 unmittelbar vor der Öffnung 21 eines Gemisch-Auslasses liegt, der kanülenartig ähnlich wie bei einer Spritze in der unteren bzw. vorderen Spitze 23 des Mischkopfes 11 angeordnet ist.

Zum Drehantrieb ist der Rührer 17 an eine Rührerwelle 24 angeschlossen, die im Lagergehäuse 12 drehbar gelagert ist. Für den Antrieb sorgt ein nicht dargestellter Antriebsmotor, der an den Gehäusekopf 13 angeflanscht ist und dessen Abtriebswelle durch eine im Gehäusekopfdeckel 25 angeordnete Öffnung in den Gehäusekopf hineinragt und dort über eine geeignete Kupplung an das obere Ende der Rührerwelle angeschlossen ist.

Der Rührer dient mit seinem Rührkopf 16 nicht nur dazu, die einzelnen Komponenten des zu verarbeitenden Kunststoffgemisches miteinander zu vermengen, sondern hat darüber hinaus die Aufgabe, die Öffnung 21 des Auslasses 22 mit seiner vorderen Spitze 20 nach Art einer Düsennadel zu verschließen bzw. zum Ejizieren des Gemisches freizugeben. Hierzu ist der Rührer 17 mitsamt seiner Rührerwelle axial verschieblich in der Mischkammer 14 bzw. dem Lagergehäuse 12 gelagert. Die Anordnung ist dabei so getroffen, daß sich die Rührerwelle 24 gegenüber dem Innenring 26 des unteren Hauptwälzlagers 27 der Welle verschieben kann, das mit seinem Außenring 28 fest zwischen zwei Gehäuseteilen 12a, 12b des Lagergehäuses 12 eingebaut ist. An ihrem in der Zeichnung oberen Ende ist die Rührerwelle 24 mit einem zweiten Lager 29 gelagert, dessen Innenring 30 auf einem Wellenabsatz mittels einer gekonterten Wellenmutter 31 festgelegt ist, während der Außenring des als Rillenkugellagers ausgestalteten Wälzlagers 29 in einer Lageraufnahme 32 angeordnet ist. Die Lageraufnahme wiederum ist axial verschieblich in einer Führungshülse 33 gelagert, wobei sie zur Verdrehsicherung gegenüber der Führungshülse eine in Axialrichtung 34 verlaufende Nut 35 aufweist, in die ein an der Führungshülse angeordneter, radial nach innen vorspringender Haltestift 36 eingreift.

An ihrem Außenumfang ist die Führungshülse 33 mit einem von der Gehäuseaußenseite 37 zugänglichen Werkzeuganschluß 38 versehen, so daß sie mit einem geeigneten Werkzeug von außen im Gehäuse verdreht werden kann.

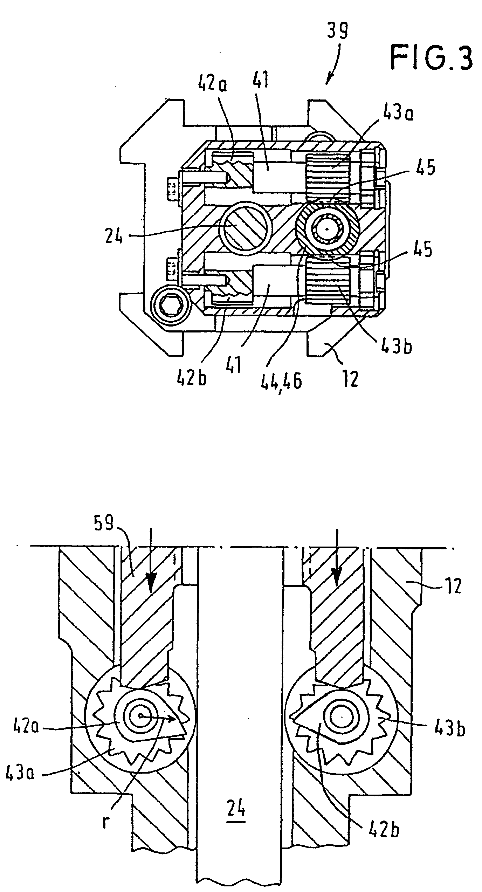

Zum Verschieben der Rührerwelle 24 im Gehäuse 12 und damit zum Abheben des Rührers 17 von der Öffnung 21 des Auslasses 22 ist die Vorrichtung mit einer Antriebseinheit 39 versehen, die im wesentlichen aus einem mechanischen Nockentrieb besteht, der am besten in den Fig. 2 bis 4 erkennbar ist. Der Nockentrieb 40 weist zwei parallel zueinander angeordnete Nockenwellen 41 mit je einer, an einem Ende der Nockenwellen ausgebildeten Betätigungsnocke 42a,b auf, die im Lagergehäuse 12 beidseits der Rührerwelle quer zu dieser drehbar gelagert sind. An ihren anderen Enden sind die Nockenwellen 41 mit Antriebszahnrädern 43a,b versehen, über die sie von einem gemeinsamen Zahnstangen-Antriebselement 44 mit Doppelverzahnung 45 gegenläufig drehbar sind.

Das Zahnstangen-Antriebselement 44 wird von einer Kolbenstange 46 eines Kolbens 47 gebildet, der Bestandteil einer pneumatischen Kolben-Zylindereinheit 48 ist, die sich ebenfalls in dem Gehäuse 12 seitlich neben der Rührerwelle befindet.

Wie aus Fig. 1 erkennbar ist, ist der Zylinderraum 49 der Kolbenzylindereinheit 48 unten mit einem Verschlußdeckel 50 dicht verschlossen, an den sich der Kolben in seiner tiefsten, gestrichelt dargestellten Stellung anlegt. Die Kolbenstange 46 ist als Hohlzylinder ausgebildet, mit einer axialen Führungsbohrung 51 für eine Schraubendruckfeder 52, die sich einerseits am Bohrungsgrund 53 der Führungsbohrung 51 auf einer dort angeordneten Federunterlage 54 und andererseits an der oberen Stirnseite 55 eines Zylinderraums 56 abstützt, in dem die Kolbenstange 46 axial verschieblich aufgenommen ist.

Die Schraubendruckfeder 52 dient als Rückstellfeder für den Kolben 47 in die gestrichelt dargestellte, tiefste Stellung, wenn der Zylinderraum 49 nicht mit Druckluft beaufschlagt ist. Um zu verhindern, daß die vorgespannte Rückstellfeder 52 bei tiefster Stellung des Kolbens oberhalb der Kolbenstange seitlich ausknickt, ist ein von der oberen Stirnseite 55 nach unten vorragender Führungsdorn 57 vorgesehen, um den sich die Schraubenfeder 52 windet.

Wendet man sich nun den Fig. 2 und 4 zu, so erkennt man, daß die Betätigungsnocken 42a,b spiegelbildlich zueinander ausgestaltet sind und einen Nockenradius r haben, der über einen Drehwinkel von ca. 180° von einem Minimalwert zu einem Maximalwert stetig zunimmt. Die Nocken 42 wirken auf das untere Ende einer Betätigungshülse 59, die die Rührerwelle 24 umgibt und die gemeinsam mit der am oberen Ende der Betätigungshülse eingeschraubten Lageraufnahme 32 ein Hubelement 60 zum Verschieben der Rührerwelle 24 zusammen mit dem daran angeordneten Rührkopf 16 bildet. Zum Anheben der Lüften des Rührkopfes 16 in der Mischkammer 14 und damit zum Freigeben der Öffnung 21 wird der Zylinderraum 49 mit Druckluft beaufschlagt, wodurch der Kolben 47 bei steigendem Druck im Zylinderraum aus seiner in Fig. 1 gestrichelt dargestellten Stellung in die durchgezogen gezeichnete Position verfährt. Die dabei nach oben verschobene Kolbenstange 46 verdreht dann mittels der mit den Antriebszahnrädern 43a,b kämmenden Zahnstange 44 die beiden Nockenwellen 41 gegenläufig zueinander, so daß die Betätigungsnocken 42a,b aus ihrer in Fig. 4 dargestellten Position in die Lage gem. Fig. 2 verdreht werden und dabei das aus Betätigungshülse 59 und Lageraufnahme 32 bestehende Hubelement 60 im Gehäuse axial nach oben verschieben. Diese Axialbewegung wird über das obere Rillenkugellager 29 auf die Rührerwelle 24 übertragen, die somit um den gleichen Betrag wie das Hubelement 60 zusammen mit dem Rührkopf 16 axial angehoben wird und die Auslaßöffnung 21 dadurch freigibt.

Bei Erreichen des größten, gewünschten Öffnungsquerschnittes für den Gemischauslaß 22, der in den Fig. 1 und 2 dargestellt ist, schlägt das Hubelement 60 über ein an der oberen Stirnseite der Lageraufnahme 32 aufliegendes Bauteil 61 an einem Anschlagelement 62 an, das von oben in ein im Gehäusekopf 13 vorgesehenes Innengewinde 63 verstellbar eingeschraubt ist. Mit dem Anschlagelement 62 wird der Verstellweg der Rührerwelle und damit auch des Rührkopfes nach oben begrenzt; durch Verschrauben des Anschlagelementes im Innengewinde kann die Länge des Verstellweges verändert werden.

Wenn zum Schließen des Gemischauslasses 22 der Druck in der Kolben-Zylindereinheit 48 verringert wird, drückt die Schraubendruckfeder 52 den Kolben 47 wieder zurück in seine untere, gestrichelt dargestellte Lage, wodurch auch die von den Nockenwellen 41 angetriebenen Betätigungsnocken 42 in ihre in Fig. 4 dargestellte Position zurückverdreht werden. Der Rührer 17 wird dabei von einer im Gehäusekopf angeordneten Schließfeder 64 wieder in die Schließlage vorgeschoben, in der die Spitze 20 des Rührkopfs 16 die Öffnung 21 des Gemischauslaßes 22 verschließt. Hierzu stützt sich die als Schraubendruckfeder ausgestaltete Schließfeder 64 einerseits an dem einen Federteller bildenden Bauteil 61 und andererseits an einem Federanschlag 65 ab, der ähnlich wie das Anschlagelement 62 in das Innengewinde 63 am Gehäusekopf 13 eingeschraubt ist und zur Veränderung der Vorspannung der Schließfeder 64 im Innengewinde vor- oder zurückgeschraubt werden kann. Die Schließfeder 64 drückt über den Federteller 61, die Lageraufnahme 32 und das obere Rillenkugellager 29 die Rührerwelle 24 und damit auch den Rührkopf 16 fest nach unten in Richtung auf die Mischkammer 14, in der sich die Rührerspitze 20 dann dicht an den Rand der Öffnung 21 anlegt.

Wendet man sich nun Fig. 4 zu, so erkennt man, daß in der tiefsten Stellung des Hubelements 16, also in der die Öffnung 21 verschließenden Position des Rührkopfes 16, zwischen den Betätigungsnocken 42a,b und der Betätigungshülse 59 ein kleiner Spalt verbleibt. Dieser Spalt dient dazu, sicherzustellen, daß der Rührkopf mit seiner Spitze 20 über die Rührerwelle und die übrigen beteiligten Bauteile der Vorrichtung von der Schließfeder 64 tatsächlich in dichten Kontakt mit dem Rand der Öffnung 21 gedrückt wird, also sicher vollständig geschlossen wird und nicht etwa ein Ringspalt zwischen Spitze 20 und Rand der Öffnung 21 verbleibt, der ohne den in Fig. 4 erkennbaren Spalt 66 zwischen Betätigungsnocken und Betätigungshülse auftreten könnte. Zur Einstellung des Spaltes 66, der im Betrieb der Vorrichtung möglichst klein sein sollte und üblicherweise nicht mehr als wenige Mikrometer beträgt, dient die besondere, oben bereits angedeutet Ausgestaltung der Führungshülse 33, der darin axial verschieblichen, gegenüber der Führungshülse jedoch drehfesten Lageraufnahme 33 und der Betätigungshülse 59, die in ihrer Durchlaßbohrung 67 für die Rührerwelle 24 mit einem Gewinde 68 versehen ist, in das die Lageraufnahme 32 mit einem Gewindefortsatz 69 eingeschraubt ist. Die Betätigungshülse 59 ist im Gehäuse 12 zwar axial verschieblich aufgenommen, kann sich jedoch gegenüber dem Gehäuse nicht verdrehen, was durch einen unrunden Querschnitt der Betätigungshülse 59 ermöglicht wird, der durch einen Vergleich der Wandstärken der Hülse 59 in den Fig. 1 und 2 erkennbar ist. Zum Einstellen des Spaltes 66 kann die Führungshülse 33 von einem von der Gehäuseaußenseite 37 her an dem Werkzeuganschluß 38 angeschlossenen Werkzeug im Gehäuse verdreht werden, wobei der Haltestift 36 die Lageraufnahme 32 mitnimmt und je nach Drehrichtung den Gewindefortsatz 69 in die Betätigungshülse ein- oder ausschraubt und so die axiale Position der Betätigungshülse im Gehäuse verändert. Die relative Lage von Hubelement 60 und Betätigungsnocken des Nockentriebs 40 kann damit einfach und genau so eingestellt werden, daß das Spiel 66 zwischen Nocken und Betätigungshülse in der in Fig. 4 dargestellten Verschlußstellung möglichst gering, aber in jedem Fall ausreichend groß ist, um einen sicheren Verschluß im Mischkopf zu gewährleisten.

Die Erfindung ist nicht auf das dargestellte und beschriebene Ausführungsbeispiel beschränkt, sondern es ergeben sich viele Änderungen und Ergänzungen, ohne den Rahmen der Erfindung zu verlassen. So sind bei dem beschriebenen Ausführungsbeispiel die Nockenwellen mit ihren Betätigungsnocken und den Antriebszahnrädern einteilig ausgestaltet und können als ganzes ausgetauscht werden, beispielsweise, wenn für die Verarbeitung eines anderen Gemisches andere Verhältnisse bei der Öffnungsgeschwindigkeit und -beschleunigung des Rührkopfes gewünscht werden und daher Nocken mit anderen Nockenformen eingebaut werden sollen. Alternativ ist es selbstverständlich auch möglich, die Betätigungsnocken auswechselbar an den Nockenwellen zu befestigen und nicht die kompletten Nockenwellen, sondern nur die Nocken selbst auszutauschen. Anstelle des dargestellten und beschriebenen Pneumatikzylinders kann selbstverständlich auch ein Hydraulikzylinder oder ein anderer geeigneter Antrieb für das Nockengetriebe gewählt werden, beispielsweise ein Elektromotor, der über ein geeignetes Untersetzungsgetriebe die beiden Nockenwellen dreht. Anstelle der beiden bei dem Ausführungsbeispiel eingebauten Radialkugellager für die Rührerwelle können auch für hohe Rührerdrehzahlen besonders geeignete Nadellager od.dgl. Verwendung finden, wobei dann die Axialbewegung des Hubelements über ein separates Axialwälzlager auf die Rührerwelle übertragen wird, da Nadellager anders als Rillenkugellager Axialkräfte nicht zu übertragen vermögen.

## Patentansprüche

1. Vorrichtung zum Herstellen und/oder Verarbeiten von Mehrkomponentengemischen, insbesondere von Kunststoffgemischen mit einem Mischkopf mit mindestens einem Einlaß für das Gemisch oder dessen Komponenten, mit einem im Mischkopf drehend antreibbaren Rührer zum.Vermischen des Gemisches bzw. dessen Komponenten und mit einem Auslaß für das Gemisch, wobei der Rührer im Mischkopf mittels einer Antriebseinheit axial verschieblich angeordnet ist und entsprechend seiner Axialposition den Auslaß freigibt oder verschließt, **dadurch gekennzeichnet, daß** die Antriebseinheit (39) einen mechanischen Nockentrieb (40) mit mindestens einer Betätigungsnocke (42) aufweist, die mit einem am Rührer (17) bzw. dessen Welle (24) angreifenden Hubelement (60) zusammenwirkt, wobei die mindestens eine Betätigungsnocke (42) eine Nockenform mit stetigem bzw. ruckfreiem Verlauf und einen von der Schließstellung zur den Auslaß (22) des Mischkopfes (11) freigebenden Stellung des Rührers (17) hin größer werdenden Nockenradius (r) hat.

2. Vorrichtung nach Anspruch 1, **dadurch gekennzeichnet, daß** der Nockentrieb (40) mindestens eine eine Betätigungsnocke (42) aufweisende Nockenwelle (41) hat, die in einem Lagergehäuse (12) seitlich neben der Rührerwelle (24) drehbar gelagert ist.

3. Vorrichtung nach Anspruch 1 oder 2, **dadurch gekennzeichnet, daß** der Nockentrieb (40) zwei parallel angeordnete Nockenwellen (41) mit je einer Betätigungsnocke (42a,b) aufweist, die in einem gemeinsamen Lagergehäuse (12) beidseitig der Rührerwelle (24) drehbar gelagert sind.

4. Vorrichtung nach einem der Ansprüche 1 bis 3, **dadurch gekennzeichnet, daß** die Nockenwellen (41) im Gehäuse (12) gegenläufig drehend angetrieben sind.

5. Vorrichtung nach Anspruch 3 oder 4, **dadurch gekennzeichnet, daß** die Nockenwellen (41) ein gemeinsames Antriebselement (44) aufweisen.

6. Vorrichtung nach einem der Ansprüche 1 bis 5, **dadurch gekennzeichnet, daß** die Nockenwelle(n) (41) mit je einem Antriebszahnrad (43a,b) versehen ist/sind, das/die von einem in Axialrichtung (34) verschieblich angetriebenen Zahnstangen-Antriebselement (44) drehbar ist/sind.

7. Vorrichtung nach Anspruch 6, **dadurch gekennzeichnet, daß** das Zahnstangen-Antriebselement (44) mit einer Doppel- oder umlaufenden Verzahnung (45) für beide Antriebszahnräder (43a,b) bei zwei parallel angeordneten Nockenwellen (41) versehen ist.

8. Vorrichtung nach einem der Ansprüche 1 bis 7, **dadurch gekennzeichnet, daß** das Antriebselement (44) im wesentlichen aus dem Kolben (47) einer hydraulischen oder pneumatischen Kolben-Zylindereinheit (48) besteht oder mit diesem gekoppelt ist.

9. Vorrichtung nach einem der Ansprüche 1 bis 8, **dadurch gekennzeichnet, daß** dem Antriebselement (44) eine Rückstellfeder (52) zugeordnet ist.

10. Vorrichtung nach Anspruch 9, **dadurch gekennzeichnet, daß** das Antriebselement (44) eine axiale Führungsbohrung (51) für die als Schraubendruckfeder ausgebildete Rückstellfeder (52) aufweist.

11. Vorrichtung nach Anspruch 9 oder 10, **gekennzeichnet durch** einen Führungsdorn (57) für die als Schraubenfeder ausgestaltete Rückstellfeder (52).

12. Vorrichtung nach einem der Ansprüche 1 bis 11, **dadurch gekennzeichnet, daß** die Betätigungsnocken (42a,b) der beiden parallel angeordneten Nockenwellen (41) spiegelbildlich zueinander ausgestaltet und die zugehörigen Nockenwellen (41) gegenläufig angetrieben sind.

13. Vorrichtung nach einem der Ansprüche 1 bis 12, **dadurch gekennzeichnet, daß** die Nocke(n) (42a,b) auswechselbar an der zugehörigen Nockenwelle (41) angeordnet ist/sind.

14. Vorrichtung nach einem der Ansprüche 1 bis 13, **dadurch gekennzeichnet, daß** die Nockenwelle(n) (41) auswechselbar im Gehäuse (12) gelagert ist/sind.

15. Vorrichtung nach einem der Ansprüche 1 bis 14, **dadurch gekennzeichnet, daß** das Hubelement (60) in Axialrichtung (34) der Rührerwelle (24) verstellbar an dieser angeschlossen ist.

16. Vorrichtung nach einem der Ansprüche 1 bis 15, **dadurch gekennzeichnet, daß** das Hubelement (60) im wesentlichen aus einer die Rührerwelle (24) koaxial umgebenden Betätigungshülse (59) und einer mit dieser einstellbar verschraubten Lageraufnahme (32) für ein Axiallager (29) der Rührerwelle (24) besteht.

17. Vorrichtung nach Anspruch 16, **dadurch gekennzeichnet, daß** das Axiallager ( 29) aus einem Radial-Rillenkugellager besteht.

18. Vorrichtung nach einem der Ansprüche 1 bis 17, **dadurch gekennzeichnet, daß** das Hubelement (60) von der/den Betätigungsnocke(n) (42a,b) entgegen der Wirkung einer Schließfeder (64) im Gehäuse (12) axial verschieblich ist.

19. Vorrichtung nach einem der Ansprüche 1 bis 18, **dadurch gekennzeichnet, daß** die Lageraufnahme (32) die Rührerwelle (24) hülsenartig umgibt und mit einem Außengewinde (69) versehen ist, mit dem sie in ein an der Betätigungshülse (59) vorgesehenes Innengewinde (68) eingeschraubt ist.

20. Vorrichtung nach einem der Ansprüche 1 bis 19, **dadurch gekennzeichnet, daß** die Lageraufnahme (32) von der Gehäuseaußenseite (37) gegenüber der Betätigungshülse (59) einstellbar ist.

21. Vorrichtung nach einem der Ansprüche 1 bis 20, **dadurch gekennzeichnet, daß** die Lageraufnahme (32) in einer Führungshülse (33) axial verschieblich aufgenommen ist.

22. Vorrichtung nach einem der Ansprüche 1 bis 21, **dadurch gekennzeichnet, daß** die Lageraufnahme (32) gegenüber der Führungshülse (33) in Umfangsrichtung arretiert ist.

23. Vorrichtung nach Anspruch 21 oder 22, **dadurch gekennzeichnet, daß** die Führungshülse (33) im Gehäuse (12) verdrehbar aufgenommen ist.

24. Vorrichtung nach einem der Ansprüche 21 bis 23, **dadurch gekennzeichnet, daß** die Führungshülse (33) mit mindestens einem radial nach innen vorspringenden Haltestift (36) versehen ist, der in eine an der Lageraufnahme (32) in Axialrichtung (34) verlaufende Nut (35) einfaßt.

25. Vorrichtung nach einem der Ansprüche 21 bis 24, **dadurch gekennzeichnet, daß** die Führungshülse (33) mit einem von der Gehäuseaußenseite (37) zugänglichen Werkzeuganschluß (38) versehen ist.

26. Vorrichtung nach einem der Ansprüche 1 bis 25, **gekennzeichnet durch** mindestens ein Anschlagelement (62) für den Rührer (17) bzw. die Rührerwelle (24).

27. Vorrichtung nach einem der Ansprüche 1 bis 26, **dadurch gekennzeichnet, daß** das Gehäuse (12) einen Gehäusekopf (13) aufweist, in dem das Anschlagelement (62) angeordnet ist.

28. Vorrichtung nach einem der Ansprüche 1 bis 27, **dadurch gekennzeichnet, daß** der Gehäusekopf (13) eine zylindrische Aufnahme für das obere bzw. hintere Ende der Rührerwelle (24) bildet und ein Innengewinde (63) aufweist, in das das Anschlagelement (62) verstellbar eingeschraubt ist.

29. Vorrichtung nach einem der Ansprüche 1 bis 28, **dadurch gekennzeichnet, daß** die Rührerwelle (24) am Anschlagelement (62) mittelbar über die Lageraufnahme (32) anschlägt.

30. Vorrichtung nach einem der Ansprüche 1 bis 29, **dadurch gekennzeichnet, daß** die Schließfeder (64) im Gehäusekopf (13) angeordnet ist und mit ihrem ersten Ende in Axialrichtung auf die Rührerwelle (24) bzw. deren Lageraufnahme (32) einwirkt und sich mit ihrem zweiten Ende an einem Federanschlag (65) abstützt.

31. Vorrichtung nach einem der Ansprüche 1 bis 30, **dadurch gekennzeichnet, daß** das erste Ende der Schließfeder (64) über einen sich an die Lageraufnahme (32) anlegenden Federteller (61) auf die Rührerwelle (24) einwirkt.

32. Vorrichtung nach einem der Ansprüche 1 bis 31, **dadurch gekennzeichnet, daß** der Federanschlag ( 65) verstellbar im Gehäusekopf (13) angeordnet ist.

33. Verfahren zum Öffnen und Schließen eines Verschlußelements in einer Vorrichtung zum Herstellen und/oder Verarbeiten von Mehrkomponentengemischen nach dem Oberbegriff des Anspruches 1, bei dem das Verschlußelement bzw. der dieses bildende Rührer (17) beim Öffnen zum Freigeben eines Auslasses (22) erst langsam von der Auslaßöffnung (21) abgehoben und mit zunehmendem Abstand von der Auslaßöffnung (21) zunehmend schneller von dieser weg bewegt wird und bei dem beim Schließen zum Absperren des Auslasses (22) das im Abstand von der Auslaßöffnung befindliche Verschlußelement (17) erst mit höherer Geschwindigkeit auf die Öffnung zu bewegt wird und mit abnehmendem Abstand von der Öffnung (21) bei Annäherung an diese die Schließgeschwindigkeit verringert wird.

## Claims

1. Apparatus for producing and/or processing of mixtures having several components, in particular of plastic mixtures, with a mixing head with at least an inlet for the mixture or its components, with a stirrer which can be driven rotationally in the mixing head for mixing the mixture or its components and with an outlet for the mixture, whereby the stirrer in the mixing head is arranged in an axially displaceable manner by means of a drive unit and releases or closes the outlet in correspondence with its axial position, **characterised in that** the drive unit (39) comprises a mechanical cam drive (40) with at least one actuating cam (42) which cooperates with a lifting element (60) which engages the stirrer (17) or its shaft (24), whereby the at least one actuating cam (42) has a cam shape with a steady or jerk-free course and a cam radius ( r) which increases from the closing position to the position of the stirrer (17) which releases the outlet (22) of the mixing head (11).

2. Apparatus according to claim 1, **characterised in that** the cam drive (40) comprises at least one cam shaft (41) comprising an actuating cam (42). Which cam shaft is pivotally mounted in a bearing housing (12) on the side next to the stirrer shaft (24).

3. Apparatus according to claim 1 or 2, **characterised in that** the cam drive (40) comprises two cam shafts (41) arranged in parallel with each other, each having an actuating cam (42a,b), which cam shafts are rotationally mounted in a common bearing housing (12) on both sides of the stirrer shaft (24).

4. Apparatus according to one of claims 1 to 3, **characterised in that** the cam shafts (41) in the housing (12) are driven in an oppositely rotating direction.

5. Apparatus according to claim 3 or 4, **characterised in that** the cam shafts (41) comprise a common drive element (44).

6. Apparatus according to one of claims 1 to 5, **characterised in that** the cam shaft(s) (41) is/are provided with one drive gear (43a,b) each, which can be rotated by means of a gear rack drive element (44) which is displaceably driven in the axial direction (34).

7. Apparatus according to claim 6, **characterised in that** the gear rack drive element (44) is provided with a dual or peripheral gearing (45) for both drive gears (43a,b) at two cam shafts (41) which are arranged in parallel.

8. Apparatus according to one of claims 1 to 7, **characterised in that** the drive element (44) essentially consists of the piston (47) of a hydraulic or pneumatic piston-cylinder unit (48) or is coupled thereto.

9. Apparatus according to one of claims 1 to 8, **characterised in that** the drive element (44) is provided with a reset spring (52).

10. Apparatus according to claim 9, **characterised in that** the drive element (44) comprises an axial guide bore (51 ) for the reset spring (52) which is formed as a compression spring.

11. Apparatus according to claim 9 or 10, **characterised by** a guide mandrel (57) for the reset spring (52) which is formed as a compression spring.

12. Apparatus according to one of claims 1 to 11, **characterised in that** the actuating cams (42a,b) of the two cam shafts (41) (41) belonging thereto are driven arranged in a parallel manner are formed in a mirror image to one another and that the cam shafts in a counter-rotating manner.

13. Apparatus according to one of claims 1 to 12, **characterised in that** the cam(s) (42a,b) is/are arranged exchangeably at the corresponding cam shaft (41 ).

14. Apparatus according to one of claims 1 to 13, **characterised in that** the cam shaft(s) (41) is/are mounted exchangeably in the housing (12).

15. Apparatus according to one of claims 1 to 14, **characterised in that** the lifting element (60) is adjustably connected to the stirrer shaft (24) in the axial direction thereof

16. Apparatus according to one of claims 1 to 15, **characterised in that** the lifting element (60) consists essentially of an actuating sleeve (59) which surrounds the stirrer shaft (24) in a coaxial manner and a bearing reception (32) for an axial bearing (29) of the stirrer shaft (24) which can be adjustably threaded thereto.

17. Apparatus according to claim 16, **characterised in that** the axial bearing (29) consists of a radial grooved ball bearing.

18. Apparatus according to one of claims 1 to 17, **characterised in that** the lifting element (60) can be axially displaced by the actuating cam(s) (42a,b) against the action of a closing spring (64) in the housing.

19. Apparatus according to one of claims 1 to 18, **characterised in that** the bearing reception (32) surrounds the stirrer shaft (24) in a sleeve-like manner and is provided with an outer thread (69) with which it is threaded onto an inner thread (68) which is provided at the actuating sleeve (59).

20. Apparatus according to one of claims 1 to 19, **characterised in that** the bearing reception (32) can be adjusted with regard to the actuating sleeve (59) from the outside (37) of the housing.

21. Apparatus according to one of claims 1 to 20, **characterised in that** the bearing reception (32) is located axially displaceable in a guide sleeve (33).

22. Apparatus according to one of claims 1 to 21, **characterised in that** the bearing reception (32) is stopped with regard to the guide sleeve (33) in the peripheral direction.

23. Apparatus according to claim 21 or 22, **characterised in that** the guide sleeve (33) is located in the housing in a rotatable manner.

24. Apparatus according to one of claims 1 to 23, **characterised in that** the guide sleeve (33) is provided with at least one radially inwardly projecting holding pin (36) which encloses a groove (35) which extends along the bearing reception (32) in the axial direction (34).

25. Apparatus according to one of claims 21 to 24, **characterised in that** the guide sleeve (33) is provided with a tool connection (38) which can be accessed from the outside (37) of the housing.

26. Apparatus according to one of claims 1 to 25, **characterised by** at least one stopper element (62) for the stirrer (17) or the stirrer shaft (24).

27. Apparatus according to one of claims 1 to 26, **characterised in that** the housing (12) comprises a head (13) of the housing in which the stopper element (62) is arranged.

28. Apparatus according to one of claims 1 to 27, **characterised in that** the head (13) of the housing forms a cylindrical reception for the upper or rear end of the stirrer shaft (24) and comprises an inner thread (63) into which the stopper element (62) is adjustably threaded.

29. Apparatus according to one of claims 1 to 28, **characterised in that** the stirrer shaft (24) abuts the stopper element indirectly by means of the bearing reception (32).

30. Apparatus according to one of claims 1 to 29, **characterised in that** the closing spring (64) is arranged in the head (13) of the housing and acts on the stirrer shaft (24) or its bearing reception (32) with its first end in axial direction, and is supported at a spring stopper (65) with its second end.

31. Apparatus according to one of claims 1 to 30, **characterised in that** the first end of the closing spring (64) acts on the stirrer shaft (24) by means of a spring plate (61) mounted at the bearing reception (32).

32. Apparatus according to one of claims 1 to 31, **characterised in that** the spring stopper (65) is arranged in the head (13) of the housing in a displaceable manner.

33. Method for opening and closing a closing element in an apparatus for producing and/or processing of mixtures having several components according to the preamble of claim 1, in which the closing element or the stirrer (17) forming it is first raised slowly from the outlet opening (21) during the opening for releasing an outlet (22) and is, with increasing distance from the outlet opening (21), moved therefrom increasingly faster, and in which, during the closing for shutting off the outlet (22), the closing element (17), which has a distance from the outlet opening, will initially be moved with a higher speed towards the opening, and with decreasing distance from the opening (21) during the approach thereof, the closing speed will be reduced.

## Revendications

1. Dispositif pour la production et/ou la transformation de mélanges à plusieurs composés, en particulier de matières plastiques, comprenant une tête de mélange avec au moins une admission pour le mélange ou les composés de celui-ci, avec un agitateur de mélangeage, susceptible de rotation dans la tête de mélange, et avec une évacuation du mélange, du type selon lequel l'agitateur est disposé dans la tête de mélange avec coulissement axial au moyen d'une unité d'entraînement et libère ou obture l'évacuation selon sa position axiale,
**caractérisé en ce que**
l'unité d'entraînement (39) présente un entraînement mécanique par cames (40) avec au moins une came d'actionnement (42), qui coopère avec un élément de levage (60) venant en prise avec l'agitateur (17), respectivement avec l'arbre (24) de celui-ci, le ou les cames d'actionnement (42) ayant une forme ou profil assurant un fonctionnement constant, respectivement sans à-coups, et présentant un rayon de came (r) qui va en augmentant depuis la position d'obturation jusqu'à la position assurant la libération de l'évacuation (22) de ladite tête de mélange (11).

2. Dispositif selon la revendication 1, **caractérisé en ce que** l'entraînement par cames (40) comporte au moins un arbre à cames (41) présentant une came d'actionnement (42), ledit arbre étant monté rotatif dans un boîtier- support de palier (12) en position latérale près de l'arbre (24) de l'agitateur.

3. Dispositif selon la revendication 1 ou 2, **caractérisé en ce que** l'entraînement par cames (40) présente deux arbres à came (41) parallèles et ayant chacune une came d'actionnement (42a, b), qui sont montés rotatifs dans un boîtier- support de palier (12) commun, de part et d'autre de l'arbre (24) de l'agitateur.

4. Dispositif selon l'une des revendications 1 à 3, **caractérisé en ce que** les arbres à came (41) sont entraînés en rotation inverse l'un de l'autre dans le boîtier- support de palier (12).

5. Dispositif selon la revendication 3 ou 4, **caractérisé en ce que** les arbres à came (41) présentent un élément d'entraînement (44) commun.

6. Dispositif selon l'une des revendications 1 à 5, **caractérisé en ce que** le/les arbres à came (41) sont munis chacun d'une roue dentée d'entraînement (43a, b), qui est mise en rotation par un élément d'entraînement (44) à crémaillère, dont le coulissement ou déplacement est commandé dans le sens axial (34) .

7. Dispositif selon la revendication 6, **caractérisé en ce que** l'élément d'entraînement (44) à crémaillère est muni d'une denture (45), double ou hélicoïdale ou planétaire, pour les deux roues dentées d'entraînement (43a, b) dans le cas de deux arbres à came (41) parallèles.

8. Dispositif selon l'une des revendications 1 à 7, **caractérisé en ce que** l'élément d'entraînement (44) se compose essentiellement d'une unité (47) formant vérin hydraulique ou pneumatique, ou est accouplée à ladite unité (48).

9. Dispositif selon l'une des revendications 1 à 8, **caractérisé en ce qu'**un ressort de rappel (52) est associé à l'élément d'entraînement (44).

10. Dispositif selon la revendication 9, **caractérisé en ce que** l'élément d'entraînement (44) présente un alésage de guidage axial (51) pour le ressort de rappel (52), conformé en tant que ressort hélicoïdal.

11. Dispositif selon la revendication 9 ou 10, **caractérisé par** un poinçon ou broche de guidage (57) pour le ressort de rappel (52), conformé en tant que ressort hélicoïdal.

12. Dispositif selon l'une des revendications 1 à 11, **caractérisé en ce que** la disposition mutuelle des cames d'actionnement (42a, b) des deux arbres à came (41) parallèles est celle de deux images obtenues par réflexion optique et **en ce que** lesdits arbres à came (41) sont entraînés en sens inverse l'un de l'autre.

13. Dispositif selon l'une des revendications 1 à 12, **caractérisé en ce que** la/les cames (42a, b) est/sont interchangeables par rapport à l'arbre à came (41) associé.

14. Dispositif selon l'une des revendications 1 à 13, **caractérisé en ce que** le/les arbre (s) à came (41) sont montés de façon interchangeable dans le boîtier- support de palier (12).

15. Dispositif selon l'une des revendications 1 à 14, **caractérisé en ce que** l'élément de levage (60) est fixé à l'arbre (24) d'agitateur, avec réglage dans le sens axial (34).

16. Dispositif selon l'une des revendications 1 à 15, **caractérisé en ce que** l'élément de levage (60) se compose essentiellement d'une douille ou fourreau d'actionnement (59) entourant coaxialement l'arbre d'agitateur (24), et d'un logement (32) ou coussinet de palier axial (29) pour l'arbre d'agitateur (24) avec lequel ledit logement de palier est vissé de façon réglable.

17. Dispositif selon la revendication 16, **caractérisé en ce que** le palier axial (29) se compose d'un palier à roulement à billes, avec cannelures ou rainures radiales.

18. Dispositif selon l'une des revendications 1 à 17, **caractérisé en ce que** l'élément de levage (60) est susceptible de coulisser axialement dans le boîtier- support de palier (12) par l'actionnement de la/des cames (42a, b) de façon antagoniste par rapport à un ressort de serrage (64).

19. Dispositif selon l'une des revendications 1 à 18, **caractérisé en ce que** le logement de palier (32) entoure, comme un fourreau, l'arbre d'agitateur (24) et est muni d'un filetage extérieur (69), grâce auquel ledit logement est vissé dans un filetage intérieur (68) prévu le long de la douille d'actionnement (59).

20. Dispositif selon l'une des revendications 1 à 19, **caractérisé en ce que** le logement de palier (32) est ajustable en position par rapport à la douille d'actionnement (59), à partir de la face externe (37) du boîtier- support de palier.

21. Dispositif selon l'une des revendications 1 à 20, **caractérisé en ce que** le logement de palier (32) est monté, avec coulissement axial, dans un fourreau de guidage (33).

22. Dispositif selon l'une des revendications 1 à 21, **caractérisé en ce que** le logement de palier (32) est bloqué de façon circonférentielle ou radiale par rapport au fourreau de guidage (33).

23. Dispositif selon la revendication 21 ou 22, **caractérisé en ce que** le fourreau de guidage (33) est monté rotatif dans le boîtier- support de palier (12).

24. Dispositif selon l'une des revendications 21 à 23, **caractérisé en ce que** le fourreau de guidage (33) est muni d'au moins une broche ou goupille de retenue (36), formant saillie radiale vers l'intérieur et s'engageant ou s'adaptant dans un écrou (35), mobile dans le sens axial (34) le long du logement de palier (32).

25. Dispositif selon l'une des revendications 21 à 24, **caractérisé en ce que** le fourreau de guidage (33) est muni d'au moins une pièce pour le raccordement (38) d'un outillage, accessible à partir de la face externe (37) du boîtier- support de palier.

26. Dispositif selon l'une des revendications 1 à 25, **caractérisé par** au moins un élément formant butée (62) pour l'agitateur (17), respectivement l'arbre (24) d'agitateur.

27. Dispositif selon l'une des revendications 1 à 26, **caractérisé en ce que** le boîtier- support de palier (12) présente un chapeau (13) ou couvercle, dans lequel l'élément formant butée (62) est disposé.

28. Dispositif selon l'une des revendications 1 à 27, **caractérisé en ce que** le chapeau (13) du boîtier-support constitue un logement cylindrique pour l'extrémité supérieure, respectivement la partie arrière, de l'arbre (24) d'agitateur et présente un filetage intérieur (63), dans lequel l'élément formant butée (62) se visse de façon réglable.

29. Dispositif selon l'une des revendications 1 à 28, **caractérisé en ce que** l'arbre (24) d'agitateur vient en butée avec l'élément formant butée (62), par l'intermédiaire du logement de palier (32).

30. Dispositif selon l'une des revendications 1 à 29, **caractérisé en ce que** le ressort de serrage (64) ou de fermeture est disposé dans le chapeau (13) du boîtier- support de palier et **en ce qu'**il exerce, par sa première extrémité, une force axiale sur l'arbre (24) d'agitateur, respectivement sur le logement de palier (32) de celui-ci, tandis qu'il prend appui, par sa seconde extrémité, sur une butée de ressort (65).

31. Dispositif selon l'une des revendications 1 à 30, **caractérisé en ce que** la première extrémité du ressort de serrage (64) ou de fermeture agit sur l'arbre (24) d'agitateur par l'intermédiaire d'une coupelle de ressort (61) disposée au voisinage du logement de palier (32).

32. Dispositif selon l'une des revendications 1 à 31, **caractérisé en ce que** la butée de ressort (65) est montée de façon réglable dans le chapeau (13) du boîtier- support.

33. Procédé pour l'ouverture et la fermeture d'un élément d'obturation dans un dispositif pour la production et/ou la transformation de mélanges à plusieurs composés selon l'énoncé générique de la revendication 1, selon lequel l'élément d'obturation, respectivement l'agitateur (17) formant celui-ci, est, lors de l'ouverture pour libérer une évacuation (22), d'abord lentement décollé de l'ouverture ou orifice d'évacuation (21), puis éloigné ensuite de plus en plus, à vitesse croissante, dudit orifice d'évacuation (21), tandis que, lors de la fermeture pour obturer l'évacuation (22), ledit élément d'obturation (17), se trouvant alors à distance de l'orifice d'évacuation, se rapproche d'abord de celui-ci à vitesse assez élevée, la vitesse d'obturation diminuant ensuite au fur et à mesure que la distance par rapport audit orifice (21) décroît.
